# EUROPEAN PATENT SPECIFICATION

(11) **EP 1 918 199 B1**
(45) Date of publication and mention of the grant of the patent: **16.05.2012**
(21) Application number: 07254194.9
(22) Date of filing: 23.10.2007
(51) Int. Cl.: B64D 27/14, B64D 35/04, B64D 33/02, B64D 33/04

(54) **Aircraft airframe architecture**
Auslegung eines Flugzeugs
Architecture de cellule d'avion

(30) Priority: 25.10.2006 US 586175
(43) Date of publication of application: 07.05.2008
(73) Proprietor: United Technologies Corporation, Hartford, CT 06101 (US)
(72) Inventor: Addis, Mark, Maine 04043 (US)
(74) Representative: Leckey, David Herbert

(56) References cited:
- GB-A- 547 403
- US-A- 2 936 967
- US-A1- 2004 025 493
- US-A1- 2006 011 780

## Description

### BACKGROUND OF THE INVENTION

### (1) FIELD OF THE INVENTION

The invention relates to the airline industry in general and more specifically to aircraft airframe architectures with reduced fuel burn and weight.

### (2) DESCRIPTION OF THE RELATED ART

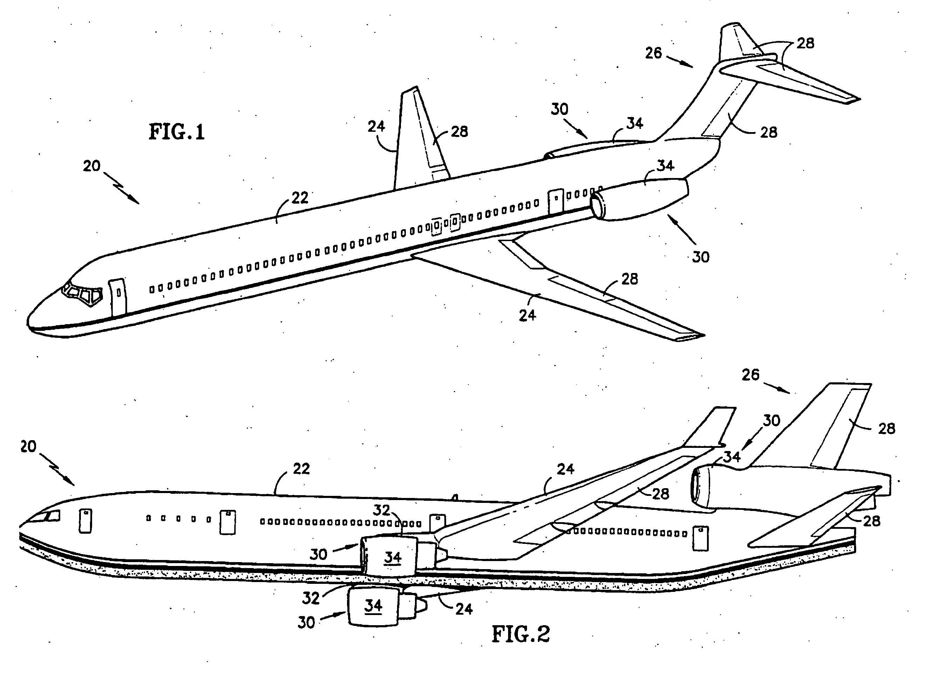

As illustrated in FIGS. 1-2, commercial aircraft airframes 20 have a central fuselage 22 for carrying passengers and cargo, wings 24 extending outwardly from the fuselage 22 for providing lift, a rear mounted tail 26 and variable surfaces 28 for controlling the aircraft. Typically, one or more propulsion systems 30 mounted in various arrangements power the airframe 22. The propulsion systems 30 may be mounted alongside the rear portion of the fuselage 22 (FIG. 1), mounted in the tail 26 or they may be suspended beneath the wings 24 from pylons 32 (FIG 2). For example, McDonnell Douglas DC-9 and MD-80 style aircraft models have propulsion systems 30 mounted alongside the rear portion of the fuselage 22. McDonnell Douglas MD-11 and Lockheed L-1011 style aircraft models have propulsion systems 30 mounted under the wings 24 and inside the tail 26. Boeing B-747 and Airbus A-380 style aircraft have propulsion systems 30 suspended beneath the wings 24 only. Although these aircraft are exemplary, other aircraft styles exist. The propulsion systems 30 are usually streamlined with outer cowlings 34, oftentimes referred to as nacelles, to reduce aerodynamic drag. In each of the above prior art propulsion systems 30, a bladed propulsion element 36 such as a propeller or fan is driven by a dedicated gas generator core 38.

Airframe 20 aerodynamic efficiency and weight are extremely important to all airline operators. Estimates indicate that aviation fuel charges represent approximately thirty percent of an operator's yearly recurring costs. Since the airframes 20 operate for extended periods, reductions in fuel burn or weight can save an operator considerable money over the lifetime of the airframe 20.

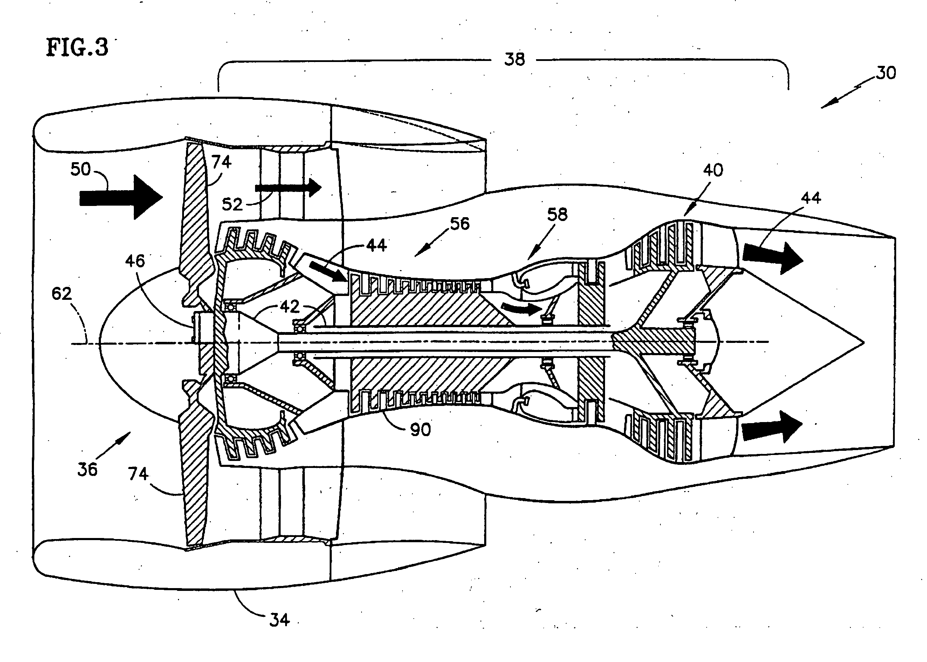

As illustrated in FIG. 3, a conventional propulsion system 30 has a large diameter bladed propulsion element 36 that is forward of a gas generator core 38. These propulsion systems 30 are referred to as high bypass ratio turbofans and, due to their low fuel burn, are now commonplace throughout the commercial airline industry.

The bladed propulsion element 36 of the lower half of FIG. 3 is directly coupled to a turbine 40 in the rear of the propulsion system 30 via a primary shaft 42. Expanding core gases 44 rotate the turbine 40, thus providing the necessary energy to drive the primary shaft 42, which rotates the bladed propulsion element 36. Since the bladed propulsion element 36 is directly coupled to the turbine 40, the bladed propulsion element 36 rotates at a relatively high speed. The high speed of the bladed propulsion element 36 produces very high tensile loads on the other rotational components, so these components are considerably larger and heavier to prevent failure. The added thrust of a larger bladed propulsion element 36 is often negated by the weight increase, making ever-larger bladed propulsion elements 36 an unattractive alternative for reduced fuel burn. The speed at which a large bladed propulsion element 36 rotates is also too fast for optimum aerodynamic efficiency and wing 24 to runway clearance is a limitation as well.

An alternative propulsion system 30 architecture is called a Geared TurboFan (GTF) and is shown in the upper half of FIG. 3. Here, the turbine 40 drives a large bladed propulsion element 36 at a slower speed through a reduction gearbox 46. The turbine 40 drives the bladed propulsion element 36 without excessively loading the rotational components. By turning the bladed propulsion element 36 at a slower speed than the turbine 40, the bladed propulsion element 36 operates at its optimum aerodynamic efficiency as well. Although the GTF provides benefits over other high bypass ratio turbofans, the wing 24 to runway clearance ultimately limits the maximum obtainable bladed propulsion element 36 diameter.

While the above-described airframes 20 provide some reduction in fuel burn and weight; however, each requires a dedicated gas generator core 38 to drive the bladed propulsion element 36. The larger bladed propulsion element 36 size and reduction gearbox 46 also increases the weight of the airframe 20. Improved airframes 20, which further reduce fuel burn and weight over the current state of the art, are therefore needed.

An aircraft having two propellers driven by a common engine is disclosed in GB-A-547403. A further aircraft having two propulsion units driven by a single power plant is disclosed in US 2006/011780 A1.

### BRIEF SUMMARY OF THE INVENTION

In accordance with the present invention, there is provided an aircraft as set forth in claim 1. The bladed propulsion elements may be fans or propellers. The gas turbine core may include a forward compressor and a rearward turbine joined by a primary shaft. An outer cowling extends from the fuselage into an ambient air stream and houses the bladed propulsion elements. In the disclosed embodiment the bladed propulsion elements discharge the ambient air stream as a core stream portion and a bypass stream portion. A duct directs the core stream portion to the compressor.

A primary advantage of the present airframe architecture is the reduced fuel burn and weight attributed to the fuselage accommodating a single gas generator core for driving multiple bladed propulsion elements.

These and other features and advantages of the present invention will become apparent in view of the following detailed description and accompanying figures of multiple embodiments, where corresponding identifiers represent like features between the various figures.

### BRIEF DESCRIPTION OF THE SEVERAL VIEWS OF THE DRAWINGS

FIG. 1 illustrates a prior art aircraft airframe with a conventional, rear-mounted propulsion system;
FIG. 2 illustrates a prior art aircraft airframe with conventional, wing-mounted and tail-mounted propulsion systems;
FIG. 3 illustrates a split sectional view of a prior art gas turbine engine with a direct drive bladed propulsion element on the lower half and a gear driven bladed propulsion element on the upper half;
FIG. 4 illustrates a simplified, top sectional view of an aircraft according to an embodiment of the present invention; and
FIG. 5 illustrates a detailed top sectional view of the aircraft of FIG. 4.

### DETAILED DESCRIPTION OF THE INVENTION

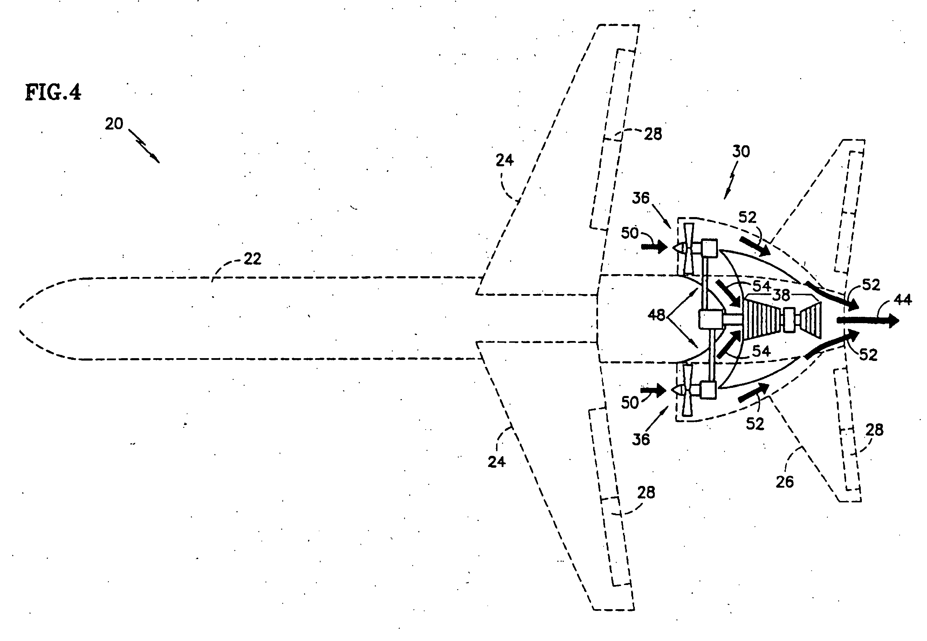

An aircraft 20 according to an embodiment of the present invention is illustrated in FIG. 4. Those skilled in the art will recognize a central, tubular fuselage 22 for carrying passengers and cargo, wings 24 extending outwardly from the fuselage 22 for providing lift, a rear mounted tail 26 and variable surfaces 28 for controlling the aircraft 20. Within the fuselage 22, in an internal mounting arrangement, is a propulsion system 30 including a single gas generator core 38. The core 38 drives multiple bladed propulsion elements 36 through a power train 48. In a preferred embodiment, the propulsion system 30 is mounted internally within the fuselage 22, proximate the tail 26 section.

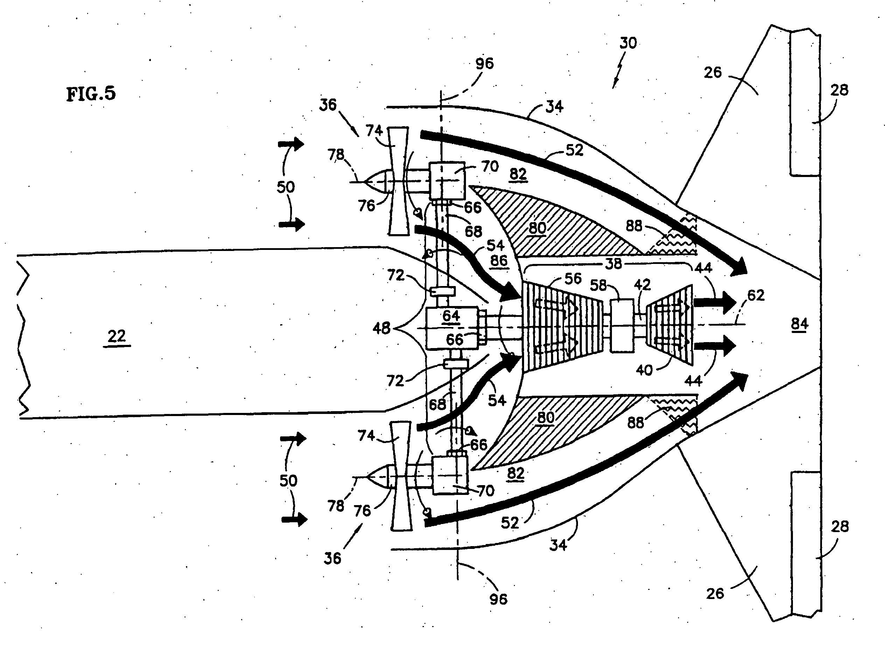

Directing your attention now to FIG. 5, further details of the aircraft 20 and associated propulsion system 30 are illustrated. The core 38 includes a forward compressor 56 for compressing a core stream 54, a central combustor 58 where fuel is added and the mixture is burned and a rear turbine 40 for extracting energy from the expanding core gases 44. The turbine 40 drives the compressor 56 via a primary shaft 42, which rotates about a longitudinal core axis 62. Although shown schematically in the figures, it is understood that the compressor 56 and turbine 40 typically contain alternating stages of blades and vanes. Also, concentric primary shafts 42 (not shown) may independently connect certain numbers of these stages.

The bladed propulsion elements 36 are driven by the core 38 through a power train 48. A bolted flange, universal joint, spline or other means 66 couples the core 38 to a primary gearbox 64. The primary gearbox 64 permits the core 38 to drive two or more drive shafts 68 extending outwardly from the primary gearbox 64. A bolted flange, universal joint, spline or other means 66 couples each of the drive shafts 68 to a secondary gearbox 70. A clutch, shear pin or other frangible means 72 is disposed between the primary gearbox 64 and each secondary gearbox 70. The frangible means 72 isolates the primary gearbox 64 in the event of a bladed propulsion element 36 or secondary gearbox 70 failure. Each secondary gearbox 70 permits a drive shaft 68 to drive a bladed propulsion element 36 extending forwardly from the secondary gearbox 70.

The bladed propulsion elements 36 each comprise a plurality of circumferentially distributed blades 74 extending radially outwardly from a central hub 76. The bladed propulsion elements 36 rotate about a bladed propulsion element axis 78 that is not coaxial with the core axis 62. In a preferred embodiment, the bladed propulsion element axis 78 is parallel with the core axis 62. The bladed propulsion elements 36 are disposed outboard of the fuselage 22 and the blades 74 impart energy to an ambient air stream 50, which is discharged rearward.

A splitter 80 spans between the compressor 56 and the secondary gearboxes 70. The splitter 80 apportions the rearward discharged ambient air stream 50 into a bypass stream 52 and a core stream 54. The bypass stream 52 portion is directed rearward through a bypass duct 82 to an exhaust nozzle 84 at the rear of the fuselage 22 for use as thrust. The core stream 54 portion is directed rearward through an inlet duct 86 to the compressor 56. A bypass stream 52 to core stream 54 ratio of up to about 5:1 is possible with the present aircraft 20 embodiment.

An outer cowling 34 extends radially outwardly from the fuselage 22 to separate the bypass stream 52 from the ambient air stream 50 and to reduce the aerodynamic drag of the aircraft 20. Preferably, the outer cowling 34 extends radially outwardly from the sides of the fuselage 22. A mixer 88 merges the radially outer bypass stream 52 with the radially inner core gases 44, ahead of the nozzle 84. The mixer 88 reduces jet noise by providing a more uniform velocity profile of the core gases 44 exiting the nozzle 84.

According to the foregoing aircraft 20 embodiment, each drive shaft 68 rotates about a longitudinal, drive shaft axis 96. The driveshaft axes 96 are not parallel to the core axis 62 and in some embodiments the driveshaft axes 96 are perpendicular to the core axis 62. In the embodiment illustrated, the driveshaft axes 96 are coplanar with the core axis 62, but in certain applications, they may not be coplanar. The primary 64 and secondary 70 gearboxes provide the flexibility of tailoring the bladed propulsion element 36 speed and direction. Gearboxes 64, 70 provide optimal compressor 56 and turbine 40 speeds, while simultaneously providing optimal blade 74 speed for improved efficiency. The bladed propulsion element 36 direction is tailored to suit each particular application. For instance, the bladed propulsion elements 36 may counter rotate or co rotate as required.

The present aircraft 20 provides reduced fuel burn, weight and cost by internally accommodating a single gas turbine core 38 in the fuselage 22. Because only a single core 38 is required to drive multiple bladed propulsion elements 36, the fuel burn, weight and cost of the aircraft 20 is substantially reduced over conventional aircraft 20.

Other alternatives, modifications and variations will become apparent to those skilled in the art having read the foregoing description. Accordingly, the invention embraces those alternatives, modifications and variations as fall within the broad scope of the appended claims.

## Claims

1. An aircraft (20) comprising:
a fuselage (22); and
a caws generator core (38) accommodated internally in said fuselage; **characterised by** further comprising:
an outer cowling (34) extending radially outwardly from the fuselage (22), said cowling (34) accepting an ambient air stream (50); and
multiple, bladed propulsion elements (36) remotely driven by the core (38) and accommodated in said cowling; and
an inlet duct (86) coupling said outer cowling (34), rearward of the bladed propulsion elements (36), to the core (38).

2. The aircraft of claim 1 further comprising a splitter (80), said splitter (80) separating said inlet duct (86) from a bypass duct (82).

3. The aircraft of claim 2, wherein the bypass duct (82) extends rearward to an exhaust nozzle (84).

4. The aircraft of claim 3, further comprising a mixer (88) disposed in the bypass duct (82), forward of the exhaust nozzle (84).

5. The aircraft of any preceding claim, wherein said outer cowling (34) extends from the sides of said fuselage (22).

## Patentansprüche

1. Flugzeug (20), das Folgendes umfasst:
einen Rumpf (22); und
einen Gasgeneratorkern (38), der innerhalb des Rumpfes untergebracht ist; **dadurch gekennzeichnet,**
**dass** es weiterhin Folgendes umfasst:
eine Haube (34), die sich von dem Rumpf (22) radial nach außen erstreckt, wobei die Haube (34) einen Umgebungsluftstrom (50) aufnimmt; und
mehrere beschaufelte Antriebselemente (36), die durch den Kern (38) fernangetrieben werden und in der Haube untergebracht sind; und
einen Einlasskanal (86), der die Außenhaube (34) rückwärtig der beschaufelten Antriebselemente (36) mit dem Kern (38) koppelt.

2. Flugzeug nach Anspruch 1, das weiterhin einen Teiler (80) umfasst, wobei der Teiler (80) den Einlasskanal (86) von einem Bypasskanal (82) trennt.

3. Flugzeug nach Anspruch 2, wobei sich der Bypasskanal (82) nach hinten zu einer Austrittsdüse (84) erstreckt.

4. Flugzeug nach Anspruch 3, das weiterhin einen im Bypasskanal (82) vor der Austrittsdüse (84) angeordneten Mischer (88) umfasst.

5. Flugzeug nach einem vorhergehenden Anspruch, wobei sich die Außenhaube (34) von den Seiten des Rumpfes (22) erstreckt.

## Revendications

1. Aéronef (20), comprenant :
un fuselage (22) ; et
un coeur de générateur de gaz (38) logé à l'intérieur dudit fuselage ;
**caractérisé en ce qu'**il comprend en outre :
un capotage externe (34) s'étendant radialement vers l'extérieur depuis le fuselage (22), ledit capotage (34) acceptant un flux d'air ambiant (50) ; et
de multiples éléments de propulsion à aubes (36) entraînés à distance par le coeur (38) et logés dans ledit capotage ; et
un conduit d'entrée (86) accouplant ledit capotage externe (34), vers l'arrière des éléments de propulsion à aubes (36), au coeur (38).

2. Aéronef selon la revendication 1, comprenant en outre un bec de séparation (80), ledit bec de séparation (80) séparant ledit conduit d'entrée (86) d'un conduit de dérivation (82).

3. Aéronef selon la revendication 2, dans lequel le conduit de dérivation (82) s'étend vers l'arrière vers une tuyère d'échappement (84).

4. Aéronef selon la revendication 3, comprenant en outre un mélangeur (88) disposé dans le conduit de dérivation (82), à l'avant de la tuyère d'échappement (84).

5. Aéronef selon l'une quelconque des revendications précédentes, dans lequel ledit capotage externe (34) s'étend depuis les côtés dudit fuselage (22).
